# EUROPÄISCHE PATENTSCHRIFT

(11) **EP 1 234 962 B1**
(45) Veröffentlichungstag und Bekanntmachung des Hinweises auf die Patenterteilung: **01.10.2008**
(21) Anmeldenummer: 02405099.9
(22) Anmeldetag: 11.02.2002
(51) Int. Cl.: F02C 7/143, F02C 3/30

(54) **Verfahren zum Betrieb einer Gassturbinenanlage mit Verbrennungsluftkühlung**
Method for operating a gas turbine power plant with cooling of the combustion air
Méthode d'opération d'une installation de turbine à gaz avec refroidissement de l'air de combustion

(30) Priorität: 27.02.2001 DE 10109430
(43) Veröffentlichungstag der Anmeldung: 28.08.2002
(73) Patentinhaber: Alstom Technology Ltd, 5400 Baden (CH)
(72) Erfinder: Braun, Jost, Dr., 79761 Waldshut-Tiengen (DE); Hoffmann, Jürgen, Dr., 5415 Rieden (CH)

(56) Entgegenhaltungen:
- EP-A- 0 889 212
- US-A- 4 949 544
- US-A- 5 353 585
- US-A- 6 012 279

## Beschreibung

### TECHNISCHES GEBIET

Die vorliegende Erfindung betrifft ein Verfahren zum Betrieb einer Gasturbinenanlage mit geregelter Ansaugluft- oder Verdichterluftkühlung.

### STAND DER TECHNIK

Zur flächendeckenden Energieversorgung werden stationäre Kraftwerksanlagen eingesetzt, die, je nach Bauart, fossile, nukleare oder regenerative Primär-Energieträger in elektrischen Strom umwandeln, der in Leitungsnetze zur öffentlichen oder privaten Energieversorgung eingespeist wird. Wegen der immer noch ungelösten Probleme bei der Nutzung regenerativer Energieträger (mangelnde Verfügbarkeit beispielsweise bei Windkraft, geringe Effizienz, sowie bei Kernkraft die Entsorgung abgebrannter Brennelemente) kommt der Nutzung fossiler Energieträger - Kohle, Erdöl, Erdgas - nach wie vor wesentliche Bedeutung zu.
Für die Stromerzeugung in Kraftwerksanlagen ist der Einsatz von erdgas- oder erdölbefeuerten Gasturbinen besonders günstig. Durch die konsequente Nutzung der Co-Generation bzw. Nutzung der anfallenden Abwärme als Prozesswärme werden Gesamtwirkungsgrade von deutlich über 50 Prozent erreicht, was mit Abstand der beste Wert für die Nutzung fossiler Energieträger ist. Ein nicht zu unterschätzendes Problem dieser Art von Anlagen ist es, dass die resultierenden Hauptdaten (Leistung und Wirkungsgrad) eine starke Abhängigkeit von der Umgebungstemperatur aufweisen. Diese Abhängigkeit von der Umgebungstemperatur ist meistens den Anforderungen des Kunden sogar entgegengesetzt, da die Anlagen dadurch bei hohen Umgebungstemperaturen weniger Strom mit schlechterem Wirkungsgrad erzeugen.
Diesem grundsätzlichen Betriebsverhalten können sich dann zusätzlich notwendige Schutzoder Regelmaßnahmen überlagern. Dies etwa, wenn die ohnehin schon hohen Temperaturen am Verdichterende oder innerhalb des Verdichters, wie sie auf Grund der heute angewendeten hohen Druckverhältnisse auftreten, durch eine hohe Ansaugtemperatur über einen limitierenden Wert angehoben werden. Die hohen Temperaturen an diesen kritischen Stellen führen dazu, dass die thermische Belastbarkeit der dort vorhandenen Bauteile überschritten wird, so dass einzelne vom Hersteller angegebene Bauteillebensdauerwerte nicht mehr gewährleistet werden können.
Im Stand der Technik wird dann üblicher Weise die Temperatur dadurch begrenzt, dass man über eine geeignete Massnahme den Verdichterenddruck und damit die Temperatur absenkt. Nachdem dieser vor allem über die Schluckfähigkeit der Turbine bestimmt wird, kommen als geeignete Massnahmen nur eine Reduktion der Ansaugmenge und/oder eine Reduktion sekundär eingebrachter Stoffströme (z. B. Wasser oder Dampf in die Brennkammer) und/oder eine Reduktion der Eintrittstemperatur in die Turbine in Frage. Alle Massnahmen, wie auch eine Kombination von Massnahmen, führen zu weiter reduzierten Leistungs- und Wirkungsgradwerten der Anlage, was den eigentlichen Nutzen der Anlage für den Eigentümer schmälert.
Bekannt im Stand der Technik ist z. B. das sogenannte Intercooling-Verfahren, bei welchem zur Erniedrigung der Temperatur der Ansaugluft der Luftstrom zwischen Booster und Hochdruckkompressor abgekühlt wird. Die Kühlung kann dabei durch Wärmetauscher oder durch das Einspritzen von Kühlmittel, wie z. B. Wasser geschehen. Solch ein Verfahren wird beispielsweise in US 4,949,544 beschrieben.
So beschreibt z. B. die US 6,012,279 ein derartiges Verfahren zur Kühlung der teilkomprimierten Luft zwischen Niederdruckverdichter und Hochdruckverdichter durch Einspritzung von Wasser. Diese Einspritzung führt dazu, dass sowohl die Temperatur des Luftstroms beim Austritt des Hochdruckkompressors reduziert wird, als auch die Temperatur in der Brennkammer.
Die US 5,463,873 beschreibt ausserdem die Verdampfungskühlung der Ansaugluft einer Gasturbine, bei welcher die Menge des eingespritzten Wassers derart eingestellt wird, dass die Sättigungsgrenze von Wasser im Luftstrom der Turbine nicht überschritten wird. Da zum Schutz der Gasturbine eine derartige Einspritzkühlung normalerweise deionisiertes Wasser verwendet, welches teuer ist, ist die Regelung darauf ausgerichtet, stets die optimale Wassermenge einzuspritzen, um einerseits die Kosten niedrig zu halten, die Kondensation von Wasser in der Gasturbine zu vermeiden, und um auf der anderen Seite den Druckabfall der Ansaugluft auf dem minimal notwendigen Wert zu halten.

### DARSTELLUNG DER ERFINDUNG

Die objektive Aufgabe der Erfindung besteht somit darin, ein Verfahren zum Betrieb einer Gasturbinenanlage, d.h. insbesondere ein Gasturbinenkraftwerk, ein Kombikraftwerk, oder eine Cogenerationanlage, mit wenigstens einem Ansaugluft komprimieren Verdichter, mit wenigstens einem die vom Verdichter komprimierte Ansaugluft erhitzenden Bauteil, welches Bauteil insbesondere eine Brennkammer oder ein Katalysator ist, mit wenigstens einer die heisse Luft aus dem Bauteil zur Wärmezufuhr als Arbeitsmedium nutzenden Turbine, und mit wenigstens einem an die Gasturbine gekoppelten Generator, wobei Kühlungsmittel vorhanden sind, welche die Kühlung von wenigstens einem Teil der Ansaugluft und/oder einem Teil von teilkomprimierter Ansaugluft innerhalb des wenigstens einen Verdichters erlauben, zur Verfügung zu stellen. Dabei soll sichergestellt werden, dass die thermische Belastbarkeit von Bauteilen an kritischen Stellen im Luftpfad der Gasturbine nicht überschritten wird, und dass gleichzeitig Kühlungsmittel zur Kühlung des Ansaugluftstromes oder auch des Luftstromes innerhalb des Verdichters oder zwischen verschiedenen Stufen von Verdichtungen möglichst wirtschaftlich und optimal, sowohl in Bezug auf die externen Bedingungen als auch in Bezug auf den internen Gasturbinenprozess, eingesetzt werden.
Die US 6,012,279 kann diese Aufgabe nicht lösen, weil in dieser der Einsatz von Intercooling respektive von Einspritzung von Wasser in den Ansaugluftpfad, die beiden gegebenenfalls in Kombination, beschrieben wird, nicht aber, wie diese Einspritzung respektive Kühlung mit einem Wärmetauscher optimal in Bezug auf externe wie auch interne Bedingungen gefahren werden soll.
Die US 5,463, 873 kann diese Aufgabe auch nicht lösen, da in dieser Schrift nur die Abstimmung der Einspritzung auf den Sättigungswert im Ansaugluftpfad beschrieben wird, d. h. eine Regelung, bei welcher die Einspritzung auf einen Wert geregelt wird, welcher unterhalb der Sättigungsgrenze von Wasser im Arbeitsmediumpfad liegt.
Die vorliegende Erfindung löst die Aufgabe, indem auf der einen Seite die Kühlungsmittel derart ausgelegt werden, dass sie in der Lage sind, bei den üblichen Bedingungen den Ansaugluftpfad der Gasturbine in einem Masse zu kühlen, dass kritische Temperaturwerte an kritischen Stellen nicht überschritten werden, und dass auf der anderen Seite die Kühlungsmittel direkt in Abhängigkeit der Temperaturwerte an kritischen Stellen geregelt angesteuert werden.
Gegenstand der Erfindung ist folglich ein Verfahren zum Betrieb einer Gasturbinenanlage, der obengenannten Art, bei welcher die Kühlungsmittel geeignet sind, wenigstens einen Teil des Luftmassenstromes vor oder innerhalb des Verdichters derart abzukühlen, dass die Luft- und/oder Bauteiltemperatur an kritischen Stellen einen festgelegten, von der thermischen Widerstandsfähigkeit des bei den kritischen Stellen angeordneten Bauteilmaterials vorgegebenen, maximalen Temperaturwert nicht überschreitet, und dass bei wenigstens einer der kritischen Stellen Temperaturmessvorrichtungen angeordnet sind, deren gemessener Temperaturwert zur gezielten Regelung oder Steuerung der Kühlungsmittel eingesetzt wird.
Der Kern der Erfindung besteht somit darin, dass eine gezielte Regelung der Kühlungsmittel vorgesehen wird. Die Regelung ist darauf optimiert, dass effektiv die tatsächlich an den kritischen Stellen auftretenden Temperaturwerte gemessen und als Regelparameter verwendet werden. So wird sichergestellt, dass die Kühlungsmittel nur gerade im wirklich notwendigen Masse, d. h. nur so, wie in Bezug auf die kritischen Stellen tatsächlich erforderlich, eingesetzt werden. Auf diese Weise wird der Einsatz von Kühlungsmitteln minimiert, respektive die durch die Kühlung bewirkte Reduktion des Gesamtwirkungsgrades der Gasturbinenanlage über den Gesamtprozess auf dem minimal erforderlichen Wert gehalten.
Die vorliegende Erfindung ist im Anspruch 1 ausgelegt und betrifft ein Verfahren zum Betrieb einer Gasturbinenanlage, wie sie oben beschrieben ist. Insbesondere werden bei einem derartigen Verfahren die an den kritischen Stellen gemessenen Temperaturwerte einer Regeleinheit zugeführt (meist ein Computer), welche dann ihrerseits die Kühlungsmittel steuert. Die Regelung wird dabei insbesondere derart gestaltet, dass diejenige Messung die Führung der Regelung übernimmt, die als erstes den ihr zugewiesenen maximalen Wert erreicht. Ausserdem wird bevorzugt die Regelung so eingestellt, dass die Kühlungsmittel bereits in einem gewissen Abstand, d. h. unterhalb des maximalen Wertes, geregelt werden.
Eine besonders bevorzugte Ausführungsform des Verfahrens ist dadurch gekennzeichnet, dass die führende Grösse indirekt aus mindestens einer oder aus einer Kombination von mehreren Messwerten berechnet wird, insbesondere bevorzugt indem die Temperatur über eine Messung des Kompressorend- oder Zwischendruckes, gegebenenfalls unter zusätzlicher Berücksichtigung der ambienten Umgebungstemperatur, ermittelt wird, oder indem die Position von mindestens einer verstellbaren Verdichtervorleitreihe, gegebenenfalls unter zusätzlicher Berücksichtigung der ambienten Umgebungstemperatur, verwendet wird, um den Betriebszustand, d.h. eine Temperaturabschätzung der kritischen Stellen zu ermitteln.
Eine weitere bevorzugte Ausführungsform weist einen Niederdruckverdichter und einen Hochdruckverdichter auf, und bevorzugt wird wenigstens ein Teil der aus dem Niederdruckverdichter austretenden, teilkomprimierten Ansaugluft von den Kühlungsmitteln gekühlt. Weiterhin bevorzugt sind die Kühlungsmittel in der Lage, die gesamte teilkomprimierte Ansaugluft genügend zu kühlen. Die Kühlungsmittel können aber auch alternativ oder zusätzlich derart ausgelegt werden, dass die gesamte Ansaugluft gekühlt werden kann.

Eine weitere bevorzugte Ausführungsform weist zusätzlich wenigstens einen Abhitzekessel sowie insbesondere bevorzugt weiterhin wenigstens eine Dampfturbine auf, wobei der Abhitzekessel mit den aus der Gasturbine austretenden heissen Abgasen Dampf zum Betrieb der Dampfturbine erzeugt, und wobei insbesondere bevorzugt Gasturbine, Generator und Dampfturbine auf einer gemeinsamen Welle gelagert sind. Die obige Bauweise lässt sich mit anderen Worten gut bei sogenannten single-shaft Anlagen einsetzen.
Die Kühlungsmittel können dabei in unterschiedlichster Form vorgesehen werden. Auf der einen Seite ist es denkbar, einen von einem gekühlten Medium durchströmten Wärmetauscher vorzusehen, wobei dann die Temperatur des Kühlmediums in oder am Wärmetauscher und/oder die Menge des Kühlmediums durch den Wärmetauscher zur Begrenzung der gemessenen, vorgegebenen Temperatur geregelt wird. Es ist aber auch möglich, einen an der Oberfläche benetzten Verdunstungskühler vorzusehen, wobei dann die über die Oberfläche des Kühlers geleitete Wassermenge zur Begrenzung der gemessenen Temperatur geregelt wird. Oder aber es kann alternativ oder zusätzlich als Kühlungsmittel wenigstens eine Düse vorgesehen werden, mit welcher Wasser oder eine andere geeignete Flüssigkeit, oder aber auch ein Flüssigkeitsgemisch, fein verteilt eingedüst werden kann. In diesem Fall wird die über die Düsen eingedüste Wasser- oder Flüssigkeitsmenge zur Begrenzung der gemessenen Temperatur geregelt. Dabei kann insbesondere bevorzugt zusätzlich zur Kühlungswirkung durch Verdunstung zusätzlich regelmässig oder sogar andauernd die auf Grund der Wirkungsgradsteigerung temperaturabsenkende Wirkung einer Nassreinigung der Verdichterschaufeln während des Betriebes eingesetzt werden, indem regelmässig oder dauerhaft bewusst mehr Wasser eingedüst wird als es der Sättigungsgrenze der Luft entspricht.
Vorzugsweise aber nicht abschliessend handelt es sich bei den kritischen Stellen um folgende Bereiche innerhalb einer Gasturbinenanlage: am Verdichterende, im Verdichterdiffusor, im Plenum vor Eintritt in die erste Brennkammer, an einer Stelle innerhalb des Verdichters, an einer Luftentnahmestelle des Verdichters, im Kühlsystem zur Turbinenkühlung, am Metall des Rotors, am Metall des Gehäuses der Gasturbine, am Metall der Schaufeln des Verdichters, am Metall an Bauteilen der Brennkammer. Insbesondere als kritisch erweist sich dabei der Verdichteraustritt.
Weitere bevorzugte Ausführungsformen der vorliegenden Gasturbinenanlage ergeben sich aus den abhängigen Ansprüchen.

Weitere bevorzugte Ausführungsformen des genannten Verfahrens ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung einer Gasturbinenanlage mit Ansaugluft- und/oder Verdichterluftkühlung; und
- Fig. 2: eine schematische Darstellung einer Gasturbinenanlage mit regelbarer Ansaugluft- und/oder Verdichterluftkühlung.

### WEGE ZUR AUSFÜHRUNG DER ERFINDUNG

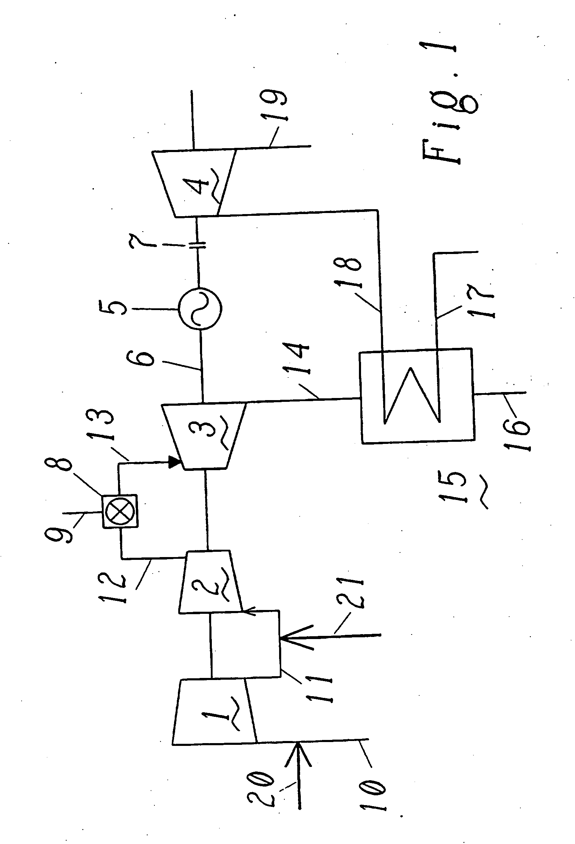

Figur 1 zeigt eine Gasturbinenanlage, bei welcher in einem Niederdruckverdichter 1 über die Luftansaugung 10 angesaugte atmosphärische Luft in einer ersten Stufe komprimiert wird, und anschliessend in einem Hochdruckverdichter 2 weiter verdichtet wird. Die komprimierte Ansaugluft 12 wird anschliessend der Brennkammer 8 zugeführt. In der Brennkammer 8 wird die Ansaugluft mit über die Brennstoffzuführung 9 zugeführtem Brennstoff vermischt, und das Gemisch verbrannt. Dabei kann es sich um die Verbrennung flüssiger oder gasförmiger Brennstoffe auf eine Arbeitstemperatur von typischerweise über 1000 Grad Celsius handeln.

Anstelle der Brennkammer (8) ist es auch möglich einen Katalysator oder einen Wärmetauscher vorzusehen, ganz allgemein betrachtet muss es sich einfach um ein Bauteil zur Wärmezufuhr handeln. Die heisse Verbrennungsluft 13 wird dann der Gasturbine 3 zugeführt und dort entspannt. Meist wird die von der Gasturbine 3 ausgestossene Abgasluft 14 einen Abhitzekessel 15 zugeführt, bevor sie über einen Auslass 16 an die Atmosphäre abgegeben wird. Im Abhitzekessel 15 wird die in der Abgasluft 14 enthaltene Restwärme zur Erzeugung von Dampf für eine Dampfturbine 4 verwendet. Dies geschieht so, dass Wasser in einer Leitung 17 zum Abhitzekessel 15 geführt wird, das Wasser in Abhitzekessel 15 verdampft, und über eine Leitung 18 der Dampfturbine 4 zugeführt wird. Die Verwendung einer zusätzlichen Dampfturbine führt zu einer signifikanten Erhöhung des gesamten Wirkungsgrades der Anlage. Bei der in Figur 1 dargestellten Anlage handelt es sich um eine sogenannte Einwellenanlage (single-shaft Anlage), das heisst Verdichter 1 und 2, Gasturbine 3, Dampfturbine 4, und Generator 5 sind alle auf einer gemeinsamen Welle 6 gelagert. Eine Kupplung 7 erlaubt dabei das Abkoppeln der Dampfturbine 4 von den anderen Komponenten.
Bei einer derartigen Gasturbinenanlage arbeitet die Gasturbine 3 heute normalerweise aus Gründen eines optimierten Prozesswirkungsgrades mit einem Druckverhältnis (höchster auftretender Druck zum Umgebungsdruck) am Auslegungspunkt über dem Wert 13, bei verschiedenen Gasturbinentypen sogar oberhalb von 30. Dies kann am Ende des Verdichters 2, aber auch an anderen kritischen Stellen der gesamten Anlage, Lufttemperaturen hervorrufen, die in Kombination mit dem hohen Druck an die Belastungsgrenze der verwendeten Materialien (Rotorbestandteile, Gehäuse, etc.) gehen. Die thermische Überlastung der an den kritischen Stellen vorhandenen Bauteile führt dazu, dass sich die Lebensdauer derartiger Bauteile dramatisch erniedrigt, und die vom Hersteller angegebenen Bauteillebensdauerwerte nicht mehr gewährleistet werden können. Dieser Fall tritt vor allem dann auf, wenn die Temperatur der Ansaugluft höher ist als am Auslegungspunkt der Gasturbine, also allgemein bei warmem Wetter und insbesondere in Klimazonen mit hoher mittlerer Jahrestemperatur. Der Effekt kann ausserdem verstärkt werden durch andere Massnahmen, wie etwa die bei der Verbrennung flüssiger Brennstoffe zur Emissionskontrolle übliche Wassereinspritzung in die Brennkammer oder die Wasser- oder Dampfeindüsung zur Leistungssteigerung. Um den ansonsten durch solche maximal zulässige Temperaturen limitierten Betriebsbereich der Gasturbine zu erweitern, werden hier eine Bauweise und ein Verfahren vorgeschlagen, welche es erlauben, ohne Beschränkung der Leistungswerte der Gasturbine, wie sie zum Beispiel nach dem Stand der Technik über eine verringerte Ansaugmenge beim Schliessen der Vorleitreihe auftreten würden, die Temperatur am Ende des Verdichters unter dem gewünschten Maximalwert zu halten.
Figur 1 zeigt ausserdem, wie zur Kühlung der Ansaugluft unterschiedlich eingegriffen werden kann. Auf der einen Seite ist es möglich, eine Kühlung 20 der vom Niederdruckverdichter 1 angesaugten atmosphärischen Luft vorzusehen. Alternativ oder zusätzlich ist es möglich, den Luftpfad zwischen Niederdruckverdichter 1 und Hochdruckverdichter 2 mit einer Kühlung 21 auf eine niedrigere Temperatur zu bringen. Bereits heute sind hierzu verschiedene Bauarten von Kühlungen bekannt. Es kann sich um einen von einem gekühlten Medium durchströmten Wärmetauscher handeln, oder um einen Verdunstungskühler, bei dem die Luft ein befeuchtetes Material großer Oberfläche durchströmt und durch die Verdunstungswirkung abgekühlt wird. Oder aber es kann sich auch um die direkte Einspritzung von Wasser oder einem anderen Medium mit Verdunstungswirkung in den angesaugten Luftstrom handeln. Denkbar sind aber ausserdem auch Kühlverfahren auf elektromagnetischer Basis, auf chemischer Basis oder anderer Art.
Zur Optimierung der Leistungsabgabe der Gasturbine und eines eventuell angeschlossenen Dampfkreislaufes wird deswegen eine Regelung vorgeschlagen, welche über weite Bereiche des ansonsten durch die maximale Temperatur an den kritischen Stellen limitierten Bereiches diesen Wert kontrolliert, ohne dass dabei zur Begrenzung die Vorleitreihe der Gasturbine geschlossen werden muss, und/oder die Brennstoffzufuhr allein auf Grund kritischer Temperaturwerte verringert werden muss. Sinngemäss kann das Mess- und Regelverfahren natürlich auch auf andere Prozessgrössen als die Temperatur angewendet werden. Diese Prozessgrössen sollten dabei aber einen direkten Bezug zur Temperatur an kritischen Stellen haben, das heisst ein Mass dieser Temperaturen an kritischen Stellen darstellen.

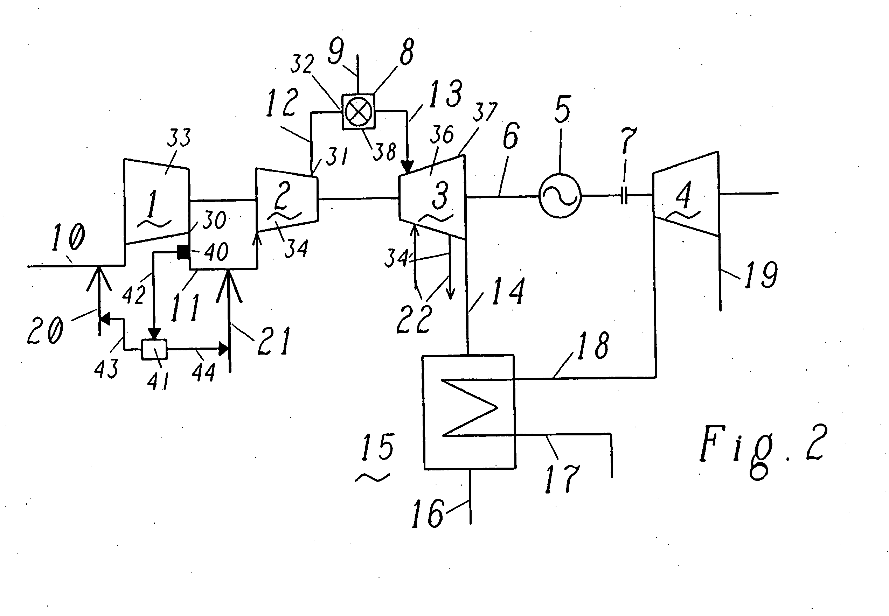

Figur 2 zeigt nun, wie erfindungsgemäss eine Regelung der Kühlungsmittel 20 und 21 erfolgen kann. Bei den kritischen Stellen, bei welchen innerhalb einer derartigen Anlage kritische Temperaturen auftreten können, d. h. Temperaturen bei welchen die Bauteile der Anlage die thermische Belastungsgrenze u. U. erreichen, kann es sich um das Ende des Niederdruckverdichters 30, das Ende des Hochdruckverdichters 31, das Plenum vor Eintritt in die erste Brennkammer 32, um Bestandteile im Niederdruckverdichter 1, im Hochdruckverdichter 2, im Kühlsystem 22 zur Gasturbinenkühlung, oder in der Gasturbine 3, oder aber auch um Bestandteile des Gehäuses der Gasturbine 37, der Brennkammer 8, oder um andere von heissem Gas durch- oder angeströmte Bauteile handeln.
An wenigstens einer, aber bevorzugt an mehreren oder jeder der durch eine zulässige maximale Temperatur limitierten Stellen, deren Temperatur nicht vornehmlich durch die Temperatur des Heissgases nach der Verbrennung bestimmt wird, wird nun vorzugsweise eine Temperaturmessstelle vorgesehen, die gemäss dem erforderlichen Regelgedanken einfach sein kann, genauso aber redundant ausgeführt werden kann. Vom Prinzip her kann anstelle der Temperatur und der Temperaturmessung auch eine andere geeignete Prozessgrösse zur Regelung verwendet werden, solange diese Prozessgrösse indirekt für die Temperatur an den kritischen Stellen verantwortlich zeichnet.
Beispielhaft ist in Figur 2 dargestellt, wie der Temperaturwert beim Austritt des Niederdruckverdichters 1 in einer Messstelle 40 gemessen und zur Regelung eingesetzt wird. Dazu wird das Temperatursignal 42 einer Regeleinheit 41 zugeführt. Die Regeleinheit 41, meist ein Computer, verarbeitet das Signal 42 und benutzt es, um über die Leitungen 43 und 44 die Kühlungsmittel 20 und 21 zu regeln. Wie bereits oben erwähnt, können vorzugsweise eine Vielzahl von Temperaturmessstellen zur Anwendung kommen, und alle die gemessenen Temperatursignale einer einzigen Regeleinheit 41 zugeführt werden, welche dann als Funktion aller Werte die Kühlungsmittel 20 und 21 ansteuert. Es erweist sich dabei als besonders sinnvoll, diejenige Messung die Führung der Regelung übernehmen zu lassen, die als erstes den ihr zugewiesenen Maximalwert der Temperatur erreicht. Ausserdem sollte, um ein geglättetes und Überschwingverhalten verhinderndes Regelverhalten zu erreichen, die Regelung der Kühlungsmittel 20, 21 bereits in einem gewissen Abstand, das heisst jeweils unterhalb des zulässigen Maximalwerts einsetzen.
Die Regelung der Kühlungsmittel 20, 21 sollte dabei von der Regeleinheit 41 derart eingestellt werden, dass sie bis zum Erreichen eines festen Maximalwertes nach Voreinstellung der gewünschten Sollleistung der Anlage eingestellt wird, ab Erreichen dieses Maximaltemperaturwertes jedoch die Kühlwirkung so geregelt wird, dass der maximale Temperaturwert nicht überschritten wird, und dass erst dann, wenn die Kühlwirkung der Kühlungsmittel 20, 21 zur Kühlung der kritischen Stellen nicht mehr ausreicht, andere leistungsmindernde Verfahren angewendet werden.
Für Gasturbinen im geschlossenen Kreislauf kann das Verfahren genauso angewendet werden, indem die Kühlerleistung des Wärmetauschers nach Austritt aus der Turbine und vor Wiedereintritt in den Verdichter entsprechend dem vorgeschlagenen Verfahren geregelt wird. An die Stelle der Brennkammer tritt hier die Wärmezufuhr, z. B. ein Wärmetauscher, der über eine externe Wärmezufuhr den Prozess mit Energie versorgt.

### BEZUGSEICHENLISTE

- 1: Niederdruckverdichter
- 2: Hochdruckverdichter
- 3: Gasturbine
- 4: Dampfturbine
- 5: Generator
- 6: gemeinsame Welle
- 7: Kupplung
- 8: Brennkammer
- 9: Brennstoffzuführung
- 10: Luftansaugung
- 11: teilkomprimierte Ansaugluft
- 12: komprimierte Ansaugluft
- 13: heisse Verbrennungsluft
- 14: Abgasluft
- 15: Abhitzekessel
- 16: Auslass
- 17: Leitung zum Abhitzekessel
- 18: Leitung vom Abhitzekessel
- 19: Auslass der Dampfturbine
- 20: Kühlung bei Luftansaugung
- 21: Kühlung bei teilkomprimierter Ansaugluft
- 22: Kühlsystem zur Gasturbinenkühlung
- 30: Messung am Ende des Niederdruckverdichters
- 31: Messung am Ende des Hochdruckverdichters
- 32: Messung im Plenum vor Eintritt in die erste Brennkammer
- 33: Messung im Niederdruckverdichter
- 34: Messung im Hochdruckverdichter
- 35: Messung im Kühlsystem zur Gasturbinenkühlung
- 36: Messung in der Gasturbine
- 37: Messung am Gehäuse der Gasturbine
- 38: Messung an Bauteilen der Brennkammer
- 40: Temperaturmessvorrichtung
- 41: Regeleinheit
- 42: Output der Temperaturmessvorrichtung
- 43: Regelung von 20
- 44: Regelung von 21

## Patentansprüche

1. Verfahren zum Betrieb einer Gasturbinenanlage, bei welcher Ansaugluft (10) in wenigstens einem Verdichter (1,2) komprimiert wird, die vom Verdichter (1,2) komprimierte Ansaugluft (12) mit wenigstens einem Bauteil zur Wärmezufuhr (8) erhitzt wird, und die heisse Luft (13) aus dem Bauteil zur Wärmezufuhr (8) als Arbeitsmedium mit wenigstens einer, diese heisse Luft (13) nutzenden Gasturbine (3), sowie mit wenigstens einem, an die Gasturbine (3) gekoppelten Generator (5),
wobei Kühlungsmittel (20,21) vorhanden sind, welche wenigstens einen Teil der Ansaugluft (10), und/oder einen Teil von teilkomprimierter Ansaugluft (11) innerhalb des wenigstens einen Verdichters (1,2) kühlen,
**dadurch gekennzeichnet, dass** an wenigstens einer kritischen Stelle (30-38), bei welcher kritischen Stelle (30-38) die Luft- und/oder Bauteiltemperatur einen festgelegten, von der thermischen Widerstandsfähigkeit des an der kritischen Stelle (30-38) vorhandenen Bauteilmaterials vorgegebenen, maximalen Temperaturwert nicht überschreiten soll, Temperaturmessvorrichtungen (40) angeordnet sind, und deren gemessener Temperaturwert (42) zur gezielten Regelung oder Steuerung der Kühlungsmittel (20,21) eingesetzt wird, so dass diese wenigstens einen Teil des Luftmassenstromes vor oder innerhalb des Verdichters (1,2) derart abkühlen, dass der maximale Temperaturwert an der kritischen Stelle (30-38) nicht überschritten wird.

2. Verfahren nach Anspruch 1, **dadurch gekennzeichnet, dass** es sich beim Bauteil zur Wärmezufuhr um eine Brennkammer (8), einen Katalysator oder einen Wärmetauscher handelt.

3. Verfahren nach einem der vorhergehenden Ansprüche, **dadurch gekennzeichnet, dass** zur gezielten Regelung oder Steuerung der Kühlungsmittel (20, 21) nicht die Temperatur an einer der kritischen Stellen (30, 38) gemessen wird, sondern eine andere messbare Grösse des Gasturbinenprozesses, welche indirekt ein Mass für den festgelegten, maximalen Temperaturwert an wenigstens einer der kritischen Stellen (30, 38) darstellt.

4. Verfahren nach einem der vorhergehenden Ansprüche, **dadurch gekennzeichnet, dass** wenigstens ein Teil der komprimierten oder teilkomprimierten Ansaugluft (10) abgezweigt wird und von dem Kühlmittel (20) gekühlt wird.

5. Verfahren nach einem der vorhergehenden Ansprüche, **dadurch gekennzeichnet, dass** ein Niederdruckverdichter (1) und ein Hochdruckverdichter (2) vorhanden sind, und dass insbesondere wenigstens ein Teil der aus dem Niederdruckverdichter (1) austretenden, teilkomprimierten Ansaugluft (11) von den Kühlungsmitteln (21) gekühlt wird.

6. Verfahren nach einem der vorhergehenden Ansprüche, **dadurch gekennzeichnet, dass** die Kühlungsmittel (21) die gesamte teilkomprimierte Ansaugluft (11) kühlen.

7. Verfahren nach einem der vorhergehenden Ansprüche, **dadurch gekennzeichnet, dass** die gesamte Ansaugluft (10) von Kühlungsmitteln (20) gekühlt wird.

8. Verfahren nach einem der vorhergehenden Ansprüche, **dadurch gekennzeichnet, dass** ausserdem wenigstens ein Abhitzekessel (15) zur Wärmeauskopplung angeordnet ist.

9. Verfahren nach Anspruch 8, **dadurch gekennzeichnet, dass** ausserdem wenigstens eine Dampfturbine (4) angeordnet ist, wobei der Abhitzekessel (15) mit den aus der Gasturbine (3) austretenden Abgasen (14) Dampf (18) zum Betrieb der Dampfturbine (4) erzeugt, und wobei insbesondere bevorzugt Gasturbine (3), Generator (5) und Dampfturbine (4) auf einer gemeinsamen Welle (6) gelagert sind.

10. Verfahren nach einem der vorhergehenden Ansprüche, **dadurch gekennzeichnet, dass** als wenigstens ein Kühlungsmittel (20, 21) ein von einem gekühlten Medium durchströmter Wärmetauscher vorgesehen ist, und die Temperatur des Kühlmediums in oder am Wärmetauscher und/oder die Menge des Kühlmediums durch den Wärmetauscher zur Begrenzung der gemessenen, vorgegebenen Temperatur geregelt wird.

11. Verfahren nach einem der vorhergehenden Ansprüche, **dadurch gekennzeichnet, dass** als wenigstens ein Kühlungsmittel (20, 21) ein an der Oberfläche benetzter Verdunstungskühler vorgesehen ist, und dass die über die Oberfläche des Kühlers geleitete Wassermenge zur Begrenzung der gemessenen Temperatur geregelt wird.

12. Verfahren nach einem der vorhergehenden Ansprüche, **dadurch gekennzeichnet, dass** als wenigstens ein Kühlungsmittel (20, 21) wenigstens eine Düse vorgesehen ist, mit welcher Wasser oder eine andere geeignete Flüssigkeit, oder ein Flüssigkeitsgemisch, fein verteilt eingedüst werden kann, und damit die limitierende Prozessgrösse direkt oder indirekt geregelt wird.

13. Verfahren nach Anspruch 12, **dadurch gekennzeichnet, dass** die über die Düsen eingedüste Wasser- oder Flüssigkeitsmenge zur Begrenzung der gemessenen Temperatur eingestellt wird, wobei insbesondere bevorzugt zusätzlich zur Kühlungswirkung durch Verdunstung zusätzlich regelmässig oder sogar andauernd die auf Grund der Wirkungsgradsteigerung temperaturabsenkende Wirkung einer Nassreinigung der Verdichterschaufeln während des Betriebes eingesetzt wird, indem man regelmässig oder dauerhaft bewusst mehr Wasser eindüst, als es der Sättigungsgrenze der Luft entspricht.

14. Verfahren nach einem der vorhergehenden Ansprüche, **dadurch gekennzeichnet, dass** die Temperaturmessvorrichtungen (40) die Temperaturmessung alternativ oder gleichzeitig an einer oder mehreren der folgenden Stellen erlauben: am Verdichterende (30,31), im Verdichterdiffusor (33), im Plenum vor Eintritt in die erste Brennkammer (32), an einer Stelle innerhalb des Verdichters (33), an einer Luftentnahmestelle des Verdichters, im Kühlsystem zur Turbinenkühlung (34), am Metall des Rotors (36), am Metall des Gehäuses der Gasturbine (37), am Metall der Beschaufelung des Verdichters (33), am Metall an Bauteilen der Brennkammer (38), am Metall der Beschaufelung oder im Heissgaskanal mindestens einer Turbine.

15. Verfahren nach einem der vorhergehenden Ansprüche, **dadurch gekennzeichnet, dass** die wenigstens eine Prozessgrösse (42) der wenigstens einen direkten oder indirekten Messvorrichtung (40) einer Regeleinheit (41), insbesondere in Form eines Computers, zugeführt wird, und diese Regeleinheit (41) Steuersignale (43,44) zur Regelung des wenigstens einen Kühlungsmittels (20,21) ausgibt.

16. Verfahren nach Anspruch 15, **dadurch gekennzeichnet, dass** zwei oder mehrere Messvorrichtungen kombiniert in der Regelung eingesetzt werden, wobei im wesentlichen diejenige Messung die Führung der Regelung übernimmt, die als erstes den ihr zugewiesenen Maximalwert erreicht.

17. Verfahren nach einem der Ansprüche 15 oder 16, **dadurch gekennzeichnet, dass** die Regelung der Kühlungsmittel (20, 21) bereits in einem gewissen Abstand, d. h. unterhalb des wenigstens einen gemessenen und führenden maximalen Temperaturwerts, einsetzt.

18. Verfahren nach einem der Ansprüche 15 bis 17, **dadurch gekennzeichnet, dass** die führende Grösse indirekt aus mindestens einer oder aus einer Kombination von mehreren Messwerten berechnet wird, insbesondere bevorzugt indem die Temperatur über eine Messung des Kompressorend- oder Zwischendruckes, gegebenenfalls unter zusätzlicher Berücksichtigung der ambienten Umgebungstemperatur, ermittelt wird, oder indem die Position von mindestens einer verstellbaren Verdichtervorleitreihe, gegebenenfalls unter zusätzlicher Berücksichtigung der ambienten Umgebungstemperatur, verwendet wird, um den Betriebszustand, d.h. eine Temperaturabschätzung der kritischen Stellen zu ermitteln.

## Claims

1. Method for operating a gas turbine plant, in which intake air (10) is compressed in at least one compressor (1, 2), the intake air (12) which is compressed by the compressor (1, 2) is heated by at least one component for heat input (8), and the hot air (13) from the component for heat input (8) is used as working medium in at least one gas turbine (3) which utilizes this hot air (13), and at least one generator (5) is coupled to the gas turbine (3), wherein cooling means (20, 21) are available, which cool at least some of the intake air (10), and/or some of the partially-compressed intake air (11) inside the at least one compressor (1, 2),
**characterized in that** at at least one critical point (30 - 38), at which critical point (30 - 38) the air temperature and/or component temperature is not to exceed an established maximum temperature value which is specified by the thermal resistance capacity of the component material which exists at the critical point (30 - 38), temperature measuring devices (40) are arranged, the measured temperature value (42) of which is used for the purposeful regulating or controlling of the cooling means (20, 21) so that these cooling means cool at least some of the air mass flow upstream of or inside the compressor (1, 2) in such a way that the maximum temperature value at the critical point (30 - 38) is not exceeded.

2. Method according to Claim 1, **characterized in that** the component for heat input is a combustion chamber (8), a catalyst or a heat exchanger.

3. Method according to one of the preceding claims, **characterized in that** for the purposeful regulating or controlling of the cooling means (20, 21) the temperature at one of the critical points (30, 38) is not measured, but another measurable variable of the gas turbine process is measured, which indirectly represents a measurement for the established maximum temperature value at at least one of the critical points (30, 38).

4. Method according to one of the preceding claims, **characterized in that** at least some of the compressed or partially-compressed intake air (10) is branched off and is cooled by the cooling means (20).

5. Method according to one of the preceding claims, **characterized in that** a low-pressure compressor (1) and a high-pressure compressor (2) are available, and **in that** especially at least some of the partially-compressed intake air (11) which issues from the low-pressure compressor (1) is cooled by the cooling means (21).

6. Method according to one of the preceding claims, **characterized in that** the cooling means (21) cool the entire partially-compressed intake air (11).

7. Method according to one of the preceding claims, **characterized in that** the entire intake air (10) is cooled by cooling means (20).

8. Method according to one of the preceding claims, **characterized in that** in addition at least one heat recovery steam generator (15) for heat supply from cogeneration is arranged.

9. Method according to Claim 8, **characterized in that** in addition at least one steam turbine (4) is arranged, wherein the waste heat boiler (15) with the exhaust gases (14) which issue from the gas turbine (3) produces steam (18) for operation of the steam turbine (4), and wherein especially preferably gas turbine (3), generator (5) and steam turbine (4) are mounted on a common shaft (6).

10. Method according to one of the preceding claims, **characterized in that** a heat exchanger, which is exposed to throughflow of a cooled medium, is provided as at least one cooling means (20, 21), and the temperature of the cooling medium in or on the heat exchanger and/or the amount of cooling medium through the heat exchanger is regulated for limiting the measured specified temperature.

11. Method according to one of the preceding claims, **characterized in that** an evaporative cooler, which is wetted on the surface, is provided as at least one cooling means (20, 21), and **in that** the amount of water which is directed over the surface of the cooler is regulated for limiting the measured temperature.

12. Method according to one of the preceding claims, **characterized in that** at least one nozzle is provided as at least one cooling means (20, 21), with which water or another suitable fluid, or a fluid mixture, can be injected in a finely distributed manner, and as a result the limiting process variable is directly or indirectly regulated.

13. Method according to Claim 12, **characterized in that** the amount of water or fluid which is injected via the nozzles is adjusted for limiting the measured temperature, wherein especially preferably, in addition to the cooling action by evaporation, the action of a wet cleaning of the compressor blades during operation, which lowers the temperature on account of the increase of efficiency, is additionally periodically or even constantly used by more water being periodically or permanently intentionally injected than corresponds to the saturation limit of the air.

14. Method according to one of the preceding claims, **characterized in that** the temperature measuring devices (40) allow the measuring of temperature alternatively or simultaneously at one or more of the following points: at the compressor end (30, 31), in the compressor diffuser (33), in the plenum before entry into the first combustion chamber (32), at a point inside the compressor (33), at an air bleed point of the compressor, in the cooling system for turbine cooling (34), on the metal of the rotor (36), on the metal of the casing of the gas turbine (37), on the metal of the blading of the compressor (33), on the metal on components of the combustion chamber (38), on the metal of the blading or in the hot gas passage of at least one turbine.

15. Method according to one of the preceding claims, **characterized in that** the at least one process variable (42) of the at least one direct or indirect measuring device (40) is fed to a control unit (41), especially in the form of a computer, and this control unit (41) issues control signals (43, 44) for regulating the at least one cooling means (20, 21).

16. Method according to Claim 15, **characterized in that** two or more measuring devices are used in combination in the regulating, wherein that measurement which first of all achieves the maximum value which is assigned to it essentially undertakes control of the regulating.

17. Method according to either of Claims 15 or 16, **characterized in that** the regulating of the cooling means (20, 21) is started within a certain period, i.e. below the at least one measured and controlling maximum temperature value.

18. Method according to one of Claims 15 to 17, **characterized in that** the controlling variable is indirectly calculated from at least one or from a combination of a plurality of measured values, especially preferably by the temperature being determined via a measurement of the compressor end pressure or intermediate pressure, if necessary giving additional consideration to the ambient environmental temperature, or by the position of at least one variable compressor inlet guide vane row being used, if necessary giving additional consideration to the ambient environmental temperature, in order to determine the operating state, i.e. a temperature assessment of the critical points.

## Revendications

1. Procédé pour faire fonctionner une installation de turbine à gaz, dans laquelle de l'air d'admission (10) est comprimé dans au moins un compresseur (1, 2), l'air d'admission (12) comprimé par le compresseur (1, 2) étant réchauffé avec au moins un composant d'apport de chaleur (8) et l'air chaud (13) provenant du composant d'apport de chaleur (8) étant utilisé comme fluide de travail, avec au moins une turbine à gaz (3) utilisant cet air chaud (13), ainsi qu'avec au moins un générateur (5) accouplé à la turbine à gaz (3), des moyens de refroidissement (20, 21) étant prévus, lesquels refroidissent au moins une partie de l'air d'admission (10) et/ou une partie de l'air d'admission (11) partiellement comprimé à l'intérieur de l'au moins un compresseur (1, 2),
**caractérisé en ce qu'**au moins en un point critique (30-38), auquel point critique (30-38) la température de l'air et/ou du composant ne doit pas dépasser une valeur de température maximale fixée, prédéfinie par la capacité de résistance thermique du matériau du composant présent au point critique (30-38), on dispose des dispositifs de mesure de la température (40), et l'on utilise leur valeur de température mesurée (42) pour la régulation ou la commande ciblée des moyens de refroidissement (20, 21), de sorte que ceux-ci refroidissent au moins une partie du débit massique d'air avant ou à l'intérieur du compresseur (1, 2), de telle sorte que la valeur de température maximale ne soit pas dépassée au point critique (30-38).

2. Procédé selon la revendication 1, **caractérisé en ce que** le composant d'apport de chaleur est une chambre de combustion (8), un catalyseur ou un échangeur de chaleur.

3. Procédé selon l'une quelconque des revendications précédentes, **caractérisé en ce que** pour la régulation ou la commande ciblée des moyens de refroidissement (20, 21), on ne mesure pas la température à l'un des points critiques (30, 38), mais une autre valeur mesurable du processus de la turbine à gaz, qui représente indirectement une mesure de la valeur de température maximale fixée en au moins un des points critiques (30, 38).

4. Procédé selon l'une quelconque des revendications précédentes, **caractérisé en ce qu'**au moins une partie de l'air d'admission comprimé ou partiellement comprimé (10) est prélevée et est refroidie par le moyen de refroidissement (20).

5. Procédé selon l'une quelconque des revendications précédentes, **caractérisé en ce qu'**un compresseur basse pression (1) et un compresseur haute pression (2) sont prévus, et **en ce qu'**en particulier au moins une partie de l'air d'admission (11) partiellement comprimé sortant du compresseur basse pression (1) est refroidie par les moyens de refroidissement (21).

6. Procédé selon l'une quelconque des revendications précédentes, **caractérisé en ce que** les moyens de refroidissement (21) refroidissent l'ensemble de l'air d'admission (11) partiellement comprimé.

7. Procédé selon l'une quelconque des revendications précédentes, **caractérisé en ce que** l'ensemble de l'air d'admission (10) est refroidi par les moyens de refroidissement (20).

8. Procédé selon l'une quelconque des revendications précédentes, **caractérisé en ce qu'**en outre au moins une chaudière à chaleur perdue (15) est prévue pour l'extraction de la chaleur.

9. Procédé selon la revendication 8, **caractérisé en ce qu'**en outre au moins une turbine à vapeur (4) est prévue, la chaudière à chaleur perdue (15) produisant avec les gaz d'échappement (14) sortant de la turbine à gaz (3) de la vapeur (18) pour faire fonctionner la turbine à vapeur (4), et en particulier de préférence la turbine à gaz (3), le générateur (5) et la turbine à vapeur (4) étant montés sur un arbre commun (6).

10. Procédé selon l'une quelconque des revendications précédentes, **caractérisé en ce que** l'on prévoit en tant qu'au moins un moyen de refroidissement (20, 21) un échangeur de chaleur parcouru par un fluide refroidi, et la température du milieu de refroidissement est régulée dans ou au niveau de l'échangeur de chaleur et/ou la quantité du milieu de refroidissement est régulée par l'échangeur de chaleur pour limiter la température mesurée prédéfinie.

11. Procédé selon l'une quelconque des revendications précédentes, **caractérisé en ce que** l'on prévoit en tant qu'au moins un moyen de refroidissement (20, 21), un refroidisseur d'évaporation mouillé à la surface, et **en ce que** la quantité d'eau guidée sur la surface du refroidisseur est régulée pour limiter la température mesurée.

12. Procédé selon l'une quelconque des revendications précédentes, **caractérisé en ce que** l'on prévoit, en tant qu'au moins un moyen de refroidissement (20, 21), au moins une buse, avec laquelle de l'eau ou un autre liquide approprié, ou un mélange de liquides, peut être injecté sous forme finement répartie, et la valeur de processus de limitation est ainsi régulée directement ou indirectement.

13. Procédé selon la revendication 12, **caractérisé en ce que** la quantité d'eau ou de liquide injectée par le biais des buses est ajustée pour limiter la température mesurée, et en particulier de préférence, on utilise en plus de l'effet de refroidissement par évaporation, aussi, de manière régulière ou même continue, l'effet d'abaissement de la température basé sur l'augmentation du rendement d'un nettoyage humide des aubes du compresseur pendant le fonctionnement, en injectant régulièrement ou de manière continue délibérément plus d'eau que la quantité correspondant à la limite de saturation de l'air.

14. Procédé selon l'une quelconque des revendications précédentes, **caractérisé en ce que** les dispositifs de mesure de la température (40) permettent la mesure de la température de manière alternative ou simultanément sur un ou plusieurs des points suivants : à l'extrémité du compresseur (30, 31), dans le diffuseur du compresseur (33), dans le plénum avant l'entrée dans la première chambre de combustion (32), à un endroit à l'intérieur du compresseur (33), en un endroit de prélèvement d'air du compresseur, dans le système de refroidissement pour le refroidissement de la turbine (34), sur le métal du rotor (36), sur le métal du boîtier de la turbine à gaz (37), sur le métal de l'aubage du compresseur (33), sur le métal des composants de la chambre de combustion (38), sur le métal de l'aubage ou dans le canal de gaz chaud d'au moins une turbine.

15. Procédé selon l'une quelconque des revendications précédentes, **caractérisé en ce que** l'au moins une valeur de processus (42) est acheminée à l'au moins un dispositif de mesure direct ou indirect (40) d'une unité de régulation (41), en particulier sous forme d'un ordinateur, et cette unité de régulation (41) émet des signaux de commande (43, 44) pour la régulation de l'au moins un moyen de refroidissement (20, 21).

16. Procédé selon la revendication 15, **caractérisé en ce que** deux dispositifs de mesure ou plus sont utilisés sous forme combinée dans la régulation, la mesure qui reprend le guidage de la régulation étant essentiellement celle qui atteint en premier la valeur maximale qui lui est attribuée.

17. Procédé selon l'une quelconque des revendications 15 ou 16, **caractérisé en ce que** la régulation des moyens de refroidissement (20, 21) s'établit déjà à une certaine distance, c'est-à-dire en dessous de l'au moins une valeur de température mesurée et maximale de guidage.

18. Procédé selon l'une quelconque des revendications 15 à 17, **caractérisé en ce que** la valeur de guidage est calculée indirectement à partir d'au moins une, ou à partir d'une combinaison de plusieurs valeurs de mesure, notamment de préférence en détectant la température par le biais d'une mesure de la pression intermédiaire ou terminale du compresseur, éventuellement en tenant compte en outre de la température environnante ambiante, ou en utilisant la position d'au moins une rangée de guidage réglable d'entrée du compresseur, éventuellement en tenant compte en outre de la température environnante ambiante, afin de détecter l'état de fonctionnement, c'est-à-dire une estimation de la température des points critiques.
